# EUROPEAN PATENT APPLICATION

(11) **EP 4 098 436 A1**
(43) Date of publication of application: **07.12.2022**
(21) Application number: 21177488.0
(22) Date of filing: 02.06.2021
(51) Int. Cl.: B32B 5/02, B32B 5/06, B32B 5/18, B32B 5/20, B32B 5/24, B32B 5/26, B32B 7/022, B32B 7/12, B32B 19/04, B32B 19/06

(54) **MULTI-LAYER PROTECTIVE ELEMENT OF A BATTERY**

(71) Applicant: h.k.o. Isolier- und Textiltechnik GmbH, 46049 Oberhausen (DE)
(72) Inventor: The designation of the inventor has not yet been filed
(74) Representative: Häckel, Stefan

(57) **Abstract**

A multi-layer protective element for thermal insulation of a battery, a battery with such a protective element and the use of such a protective element are proposed. The protective element comprises a foam layer, a compressible fibre layer in the form of a sewn non-woven needled fibre fleece, and preferably one or two protective layers containing mica. This allows high compressibility as well as good insulation properties.

## Description

The present invention concerns a multi-layer protective element for thermal insulation of a battery according to the preamble of claim 1, a battery with a multi-layer protective element according to the preamble of claim 12, and a use of a multi-layer protective element according to the preamble of claim 15.

In the present invention, the term "protective element" is preferably to be understood as a flat component with a layered structure, in particular a layer package, which is designed and/or used for the thermal insulation and/or any other shielding of a battery and/or its cells. In particular, the protective element is configured to reduce and/or delay the release of heat to the environment, in particular a vehicle interior, and/or to contain and/or reduce and/or delay the spread of heat in the battery in the event of uncontrolled and/or excessive heat development in the battery.

In the present invention, the term "battery" is to be understood as a storage element or secondary element, in particular a rechargeable storage element, for providing electrical energy by converting chemical energy. The battery is preferably composed of several interconnected accumulator cells and/or cell blocks, i.e. battery cells.

In particular, the battery is configured as a traction battery and/or for driving of electric vehicles and/or as a lithium-ion battery. Here, reliable and/or effective thermal insulation is important in order to protect the vehicle occupants in the event of the battery overheating, for example as a result of a traffic accident, at least until the arrival of rescue services and/or for a certain period of time, for example at least five minutes.

Due to their chemical composition, lithium-ion batteries in particular exhibit comparatively high instability. If a local short-circuit of the internal electrodes in a battery cell occurs, for example due to contamination of the separator separating the electrodes by trapped foreign particles and/or mechanical action or damage, the strong short-circuit current heats the battery cell up to 800 °C in a short time, sometimes up to 1300 °C. This process is known as thermal runaway. The thermal runaway of one battery cell can easily and/or quickly spread to other, adjacent battery cells, especially since the separator looses stability at relatively low temperatures, for example above 120 °C, and short circuits can therefore quickly occur in adjacent battery cells. This leads to an unstoppable chain reaction, wherein the energy stored in the battery is released in a short time, usually explosively and/or with the release of toxic gases and with the formation of flames and/or sparks. There is also the risk of the battery bursting when the internal pressure rises accordingly.

Thus, it is desirable to keep a battery cell as long as possible below a certain limit temperature, preferably 120 °C, in particular 80 °C. Above 80 °C the aging process of the battery cell is considerably accelerated and above 120 °C the separator in the battery cell often begins to melt, accompanied by irreversible damage and/or short circuits.

Likewise, there is a high demand for efficient and/or long-lasting heat protection of adjacent areas and/or rooms, especially vehicle interiors, against uncontrolled heat development in the battery. In particular, occupants and/or objects should be protected from heat until rescue and/or recovery measures have been fully completed.

In addition, during the rescue operation, the rescuers should also be protected against uncontrolled explosions when the battery is subject to thermal runaway and the risk of toxic gases (e.g. gaseous hydrofluoric acid), sparks and flames escaping should be reduced. In particular, there is a risk that, if a battery is subjected to runaway, an electric arc can occur in the battery which very quickly melts the usually metallic housing, so that in this case the risk of flames and the like escaping, for example upwards into a vehicle interior, is very high.

WO 2019/121641 A1 discloses a multi-layer protective element for a battery for thermal insulation. The protective element comprises outer protective layers of mica and a compressible needled non-woven fibre fleece inbetween.

CN 110641101 A discloses a thermal insulation composite material for electric vehicle batteries that delays thermal diffusion. The composite material comprises a silicone rubber layer and an inorganic fibre layer. The fibre layer forms a carrier layer and can be provided on both sides with a silicone rubber layer. The fibre layer contains an adhesive and a water loss endothermic filler.

US 2020/0062920 A1 relates to a battery pack wherein a silicone rubber syntactic foam fills open space in a battery casing and/or covers battery cells. The foam comprises a silicone rubber binder and hollow glass beads.

EP 3 395 872 A1 discloses a composite of a silicone foam sheet covered on one or both sides with a support made of plastic, paper, non-woven fabric, metal foil, metal mesh, glass, or glass cloth. The composite shall have good elastic and compression properties from -30 °C to 150 °C and, thus, is useful for solar panels or the like.

Battery cells, in particular pouch cells or prismatic cells, expand or change size with increased temperature and/or when charged or discharged. Thus, there is a demand for a protection element that is highly compressible, while having high thermal stability and insulation characteristics even at very elevated temperatures. The prior art products do not meet these requirements.

It is an object of the present invention to provide a multi-layer protective element for thermal insulation of a battery, a battery with such a protective element and a use of the protective element, wherein improved thermal insulation as well as improved compressibility can be achieved as well.

The above object is achieved by a multi-layer protective element according to claim 1, by a battery according to claim 12 or by a use according to claim 15. Advantageous embodiments are subject of the subclaims.

According to the present invention, the protective element comprises a foam layer and a fibre layer. Thus, optimized insulation and compressibility characteristics can be achieved.

According to a first aspect of the present invention, the fibre layer comprises or is formed by a non-woven needled fibre fleece. Such a fleece allows very effective thermal insulation as well as good compressibility. In particular, the addition of any binder, adhesive or the like resulting in decreased insulation or compressibility can be avoided.

According to a second aspect of the present invention, which can be realized independently, the fibre layer is compressible, in particular by more than 20 %, preferably more than 30 %, at a pressure of 250 kPa. This leads to a very good compressibility of the protective element, in particular when the foam layer has a higher compressibility than 30 % at 250 kPa and/or than the fibre layer.

Preferably, the foam layer has even a compressibility of more than 50 %, preferably more than 60 %, in particular more than 70 %, at 100 or 250 kPa.

Preferably, the relative or absolute compressibility of the fibre layer is lower than the one of the foam layer or is more than 20 %, in particular about or more than 30 % or 40 %, in particular about or more than 45 %, and/or less than 60 % or 70 % of the relative or absolute compressibility of the foam layer, in particular at 100 or 250 kPa.

Preferably, the fibre layer is sewn, in particular by a glass thread. This enables and/or achieves improved cohesion and/or simplifies processing, manufacture, assembly and/or use.

It is particularly preferred that the fibre layer is formed of long fibres of more than 30 mm in length and/or of a needled and/or bonded non-woven. The long fibres and/or the needling and/or bonding of the fibre layer significantly increase the mechanical resistance compared to another fibre layer. As a result, the fibre layer is particularly stretchable and pressure-elastic, which enables the absorption of high-pressure forces. At the same time, the fibre layer has a high thermal insulation capacity, as the intertwined fibres efficiently reduce the passage of thermal energy through the fibre layer. This is particularly advantageous in the event of uncontrolled heat generation within the battery, for example when a thermal runaway of a battery cell occurs, as this significantly delays the complete destruction and/or explosion of the battery. Finally, needled non-wovens have a low mass per unit area, which facilitates handling.

Preferably, the fibre layer is made of glass fibres or silicate fibres or a mixture thereof. Thus, a high thermal resistance can be achieved.

According to a third aspect of the present invention, which can be realized independently, the fibre layer is preferably binder-free. Instead of any binder, the fibres are interconnected only mechanically, preferably by needling. Thus, a higher thermal resistance can be achieved.

Preferably, the fibres are free of melt beads. This supports good compressibility.

According to a fourth aspect of the present invention, which can be realized independently, the protective element comprises preferably at least one protective layer in addition to the foam layer and fibre layer. In particular, the protective layer comprises a mineral protective material, such as phyllosilicates, preferably mica, in particular phlogopite. The protective layer is provided preferably on the outside and/or both sides of the protective element. The protective layer increases the thermal resistance and stability of the protective element and/or its components and/or can provide a higher thermal conductivity than the foam layer and/or fibre layer to minimize or retard local overheating. This applies in particular when mica and, more preferred, phlogopite is used as an essential or main component for forming the protective layer.

The protective element or protective layer can comprise alternatively or additionally a carrier layer, in particular a woven fabric or a scrim, preferably of glass fibres. Thus, a higher thermal or mechanical resistance can be achieved.

In particular, the protective element comprises on at least one flat side an adhesive layer - in particular only partially covering it - or is designed to be self-adhesive at least in sections on one flat side. This allows the protective element to be easily arranged and/or attached to or in the battery and/or further protective elements.

A proposed battery, preferably a lithium-ion accumulator, comprises a housing and at least one multi-layer protective element which is arranged in the housing for thermal insulation, wherein the protective element of the proposed battery is preferably designed according to one of the aspects mentioned before. This leads to similar advantages for the battery as explained above.

Preferably, the protective element is arranged between two neighbouring battery cells, in particular pouch or prismatic cells, and can thermally insulate them from each other. In this way, spreading of heat or thermal runaway from one battery cell to the next and/or neighbouring battery cell is effectively delayed and/or contained and/or even prevented, thus preventing or at least significantly delaying the explosive release of heat and/or fragments from the battery.

According to the present invention, the multi-layer protective element designed according to one of the above aspects is used for the thermal insulation of a battery, wherein the protective element is arranged between a housing and at least one battery cell of the battery and/or between neighbouring battery cells and/or covers at least one battery cell partly or fully, or is used for insulation between one or more battery cells on the one hand and a control device and/or control electronics of the battery on the other hand, in particular within a housing of the battery. This can again result in similar advantages.

The above-mentioned aspects and features of the present invention as well as the aspects and features of the present invention resulting from the claims and the following description can basically be realised independently of each other, but also in any combination and/or sequence. Additional advantages, features, properties and aspects of the present invention result from the claims and the following description of a preferred embodiment based on the drawing. It shows:
Fig. 1 a schematic section of a proposed multi-layer protective element;
Fig. 2 a schematic section of a proposed battery with the protective element;
Fig. 3 a schematic section of a vehicle with the proposed battery; and
Fig. 4 a diagram of compressibility measurements of the protective element.

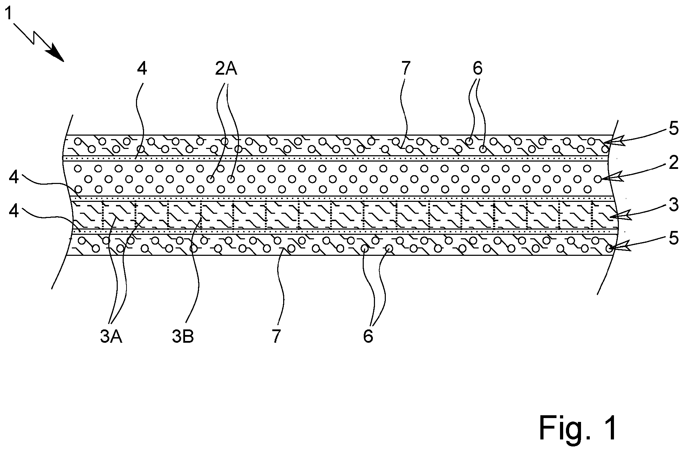

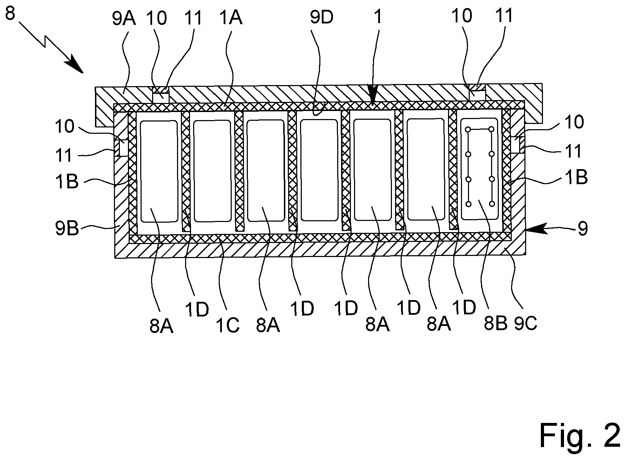

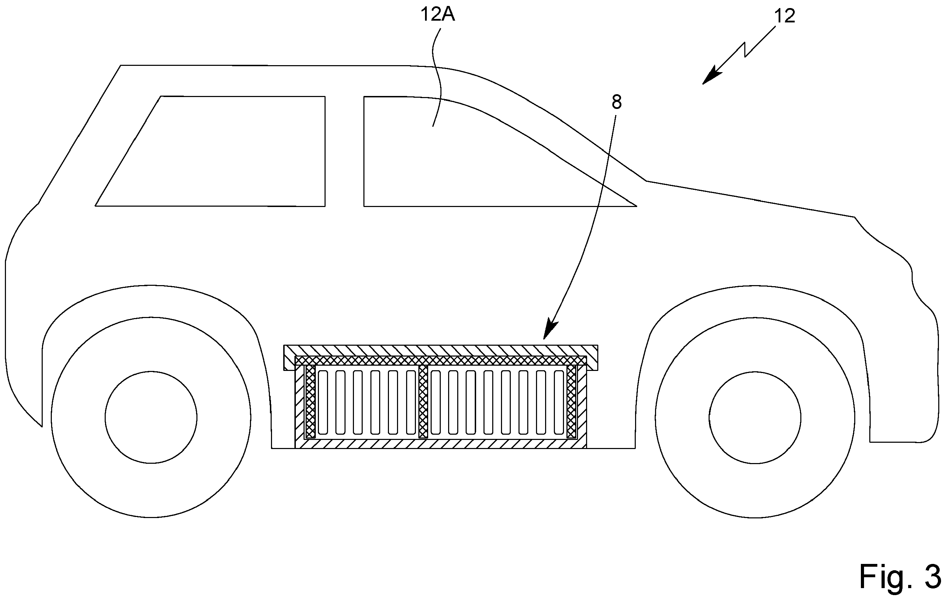

Fig. 1 shows in a schematic, not to scale sectional view a proposed multi-layer protective element 1. The protective element 1 is used for thermal insulation in particular and/or for shielding off a proposed battery 8, which is shown in Fig. 2 in a schematic, not to scale sectional view. The battery 8 (accumulator) is in particular designed as a lithium-ion accumulator, and/or intended for a vehicle 12, as indicated in Fig. 3.

Most preferred, the battery 8 serves as a drive battery or traction battery for the vehicle 12, which is preferably designed as an electric car and/or electric vehicle.

However, the protective element 1 and/or the present invention is also generally applicable and/or usable for the protection of batteries, in particular lithium-ion accumulators or the like, e.g. as stationary storage batteries, in the medical field, for battery-operated electrical appliances, in the military or for batteries for other purposes.

In the following, the preferred structure of the proposed protective element 1 is described in more detail.

The protective element 1 comprises a foam layer 2 and a fibre layer 3.

The layers 2 and 3 are preferably connected to each other, in particular adhesively bonded, i.e. by means of a connection or bonding layer 4 formed and/or arranged in-between. Thus, a composite is formed. This facilitates handling and installation and/or assembly in particular.

The foam layer 2 could also be formed or foamed directly on the fibre layer 3 so that any additional or later bonding is not necessary.

The foam layer 2 is made preferably of silicone or polyurethane.

The foam layer 2 comprises preferably open pores 2A.

Preferably, the foam layer 2 has a compressibility of more than 50%, preferably about or more than 60 %, in particular more than 65 %, at a pressure of 100 or 250 kPa.

Preferably, the foam layer 2 has a thickness of more than 1 mm, in particular of about 2 mm, and/or less than 6 mm, in particular less than 5 mm.

The fibre layer 3 comprises or is formed by or consists of fibres 3A which form preferably a non-woven, in particular a needled non-woven mat or fibre fleece as schematically shown in fig. 1.

The fibre layer 3 is preferably formed from a needled and/or bonded fibre fleece/non-woven. For the purposes of the present invention, the term "needled non-woven" is preferably to be understood as a textile fabric, the fibres of which are randomly intertwined and thereby bonded by dry needling and/or needling without binder and/or melting beads.

Preferably, the fibre layer 3 is - at least essentially - free of binding agent and/or melt beads.

The fibre layer 3 is in particular made of glass fibres or silicate fibres or a mixture thereof. For example, glass fibres, in particular of A-,C-,D-, E-, ECR-, S2- or R-glass or mixtures thereof, and/or other heat-resistant fibres may be used.

The fibres 3A preferably have an average diameter of at least 4 µm, in particular at least 5 or 6 µm, and most preferably essentially 6 to 15 µm.

The length of the fibres 3A is preferably more than 30 mm, preferably more than 40 mm, in particular essentially 50 to 60 mm. In principle, however, the length of the fibres can also be greater, for example up to about 120 mm.

The fibre layer 3 or the fibre fleece is most preferred sewn, as indicated by a thread 3B in Fig. 1. This can improve the stability and/or processability of the fibre layer 3 and/or the protective element 1.

The optional sewing is preferably done relatively loosely and/or at relatively large distances of one or more millimetres.

Sewing is preferably done before application of and/or lamination with other layers, i.e. in particular not with other layers and/or only for its own stabilisation.

Most preferred is sewing with glass fibres, i.e. sewing with a thread 3B of glass fibre(s).

Tests have shown that very good stability and ideal properties can be achieved when the non-woven fibre fleece is made at least essentially of silicate fibres and sewn most preferred with a thread 3B made of glass fibre(s).

The fibre layer 3 can also have a multi-layered/multi-ply design and optionally be sewn and/or provided with an intermediate layer and/or intermediate ply.

Preferably, the mass per unit area of the fibre layer 3 is less than 1800 or 1500 g/m², preferably less than 1300 g/m², and/or more than 150 g/m², preferably more than 200 g/m², in particular more than 300 or 400 g/m².

Preferably, the fibre layer 3 has a thickness of more than 1 mm, in particular of about 2 mm, and/or less than 4 mm, in particular less than 3 mm, when installed in the battery 8.

In the delivery state or before installation, the fibre layer 3 has preferably a thickness of more than 2 mm, in particular of about 3 mm or more, and/or less than 6 mm, in particular less than 5 mm.

Preferably, the fibre layer 3 has a greater thickness than the foam layer 2.

Alternatively, the foam layer 2 has a thickness similar to the fibre layer 3 or even greater than the fibre layer 3.

Preferably, the fibre layer 3 is compressible, in particular by more than 20 %, preferably more than 30 % at a pressure of 100 or 250 kPa. This leads to a very good compressibility of the protective element 1, in particular when the foam layer 2 has a higher compressibility than 30 % at 100 or 250 kPa and/or than the fibre layer 3.

Preferably, the relative or absolute compressibility of the fibre layer 3 is lower than the relative or absolute compressibility of the foam layer 3, in particular at 100 or 250 kPa or in a range from 100 to 200 kPa.

Preferably, the absolute compression of the foam layer 2 is greater than the one of the fibre layer 3 at a given compression strength, i.e. pressure, preferably at 100 or 250 kPa, even in consideration of the potentially higher thickness of the fibre layer 3.

Preferably, the compressibility mentioned in the present application is measured by pressing a plate of 50 x 50 mm on the respective probe or layer and by measuring the force for calculating the pressure. Further, the thickness variation or indentation is measured.

The absolute compression or compressibility corresponds to the indention, e.g. the difference initial thickness minus final thickness.

The relative compression or compressibility may be calculated as percentage based on the initial thickness, e.g. as follows: 100 • (initial thickness - final thickness) / initial thickness.

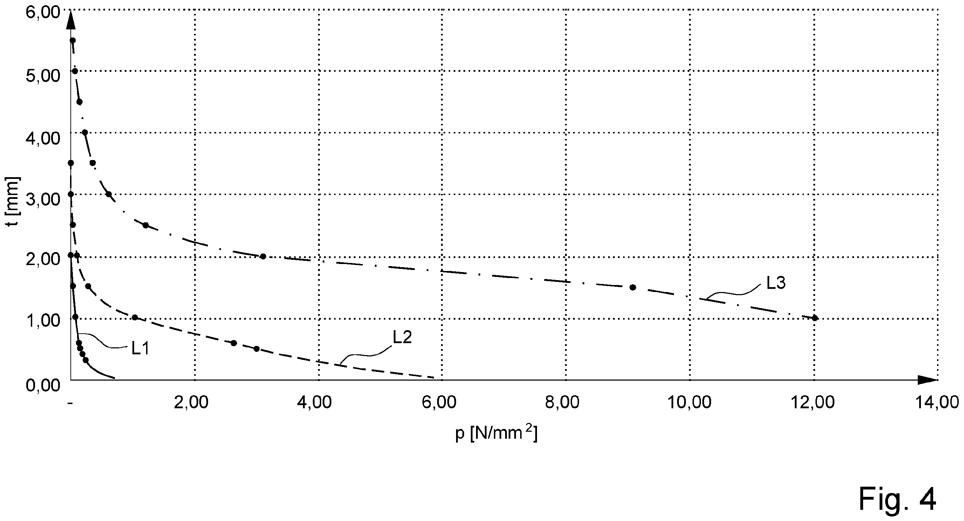

Fig. 4 shows measurements of the compressibility as outlined above of the protective element 1, wherein the x-axis relates to the applied pressure p in N/m², i.e. in MPa, and the y-axis shows the thickness t in mm.

The measured protective element 1 comprises a composite of the fibre layer 3 with a protective layer 5 on each side. The thickness t of the fibre layer 3 is about 3.3 mm. The thickness of the fibre layer 3 together with the two protective layers 5 is about 3.5 mm. The thickness of the foam layer 2 is about 2 mm.

Line L1 shows the thickness t of the foam layer 2 over the pressure p.

Line L2 shows the thickness t of the composite of fibre layer 2 and protective layers 5 over the pressure p. The line L2 shows essentially the compressibility behaviour of the fibre layer 3 as the protective layers 5 are very thin and essentially incompressible.

Line L3 shows the thickness of the measured protective element 1 over the pressure p.

The measured data indicate that the absolute compression of the foam layer 2 at 100 kPa is about 1.13 mm and the relative compression of the foam layer 2 at 250 kPa is about 56 %, and that the absolute compression of the fibre layer 3 at 100 kPa is about 1.26 mm and the relative compression of the fibre layer 3 at 250 kPa is about 38 % (the measured indention or absolute compression was related to the initial thickness of about 3,3 mm for calculating the relative compression).

The foam layer 2 has preferably a lower density and/or area weight than the fibre layer 3. Thus, the protective element 1 has a relatively low total weight, while providing excellent compressibility characteristics.

Fig. 4 shows that the foam layer 2 provides in particular initially or in a very low pressure range of up to 250 kPa or 500 kPa a very good or relevant compressibility, in particular higher absolute and/or relative compressibility as the other layers and/or fibre layer 3.

Preferably, the foam layer 2 and the fibre layer 3 are compressible at least essentially elastically, in particular in a range of at least 100 to 200 kPa, in particular at least 50 to 250 kPa and/or 100 to 500 kPa.

The protective element 1 may comprise layers 2, 3 and 5 (in particular with one or two layers 5) also in any other sequence than shown in Fig. 1, as it is the case for the measured protective element 1.

Further, the protective element 1 may comprise two foam layers 2 instead of one, i.e. one additional foam layer 2.

Optionally, the protective element 1 may comprise an additional fibre layer 3 (not shown) so that the foam layer 2 is covered on both / opposite sides by the fibre layer 3.

The protective element 1 or fibre layer(s) 3 may additionally or alternatively comprise a woven fabric or any other fibre reinforcement. For example, the fabric or fibre reinforcement may be an additional element of the protective element 1, the fibre layer 3, the foam layer 2, or an additional protective layer 5 of the protective element 1.

The term "fabric"/"woven fabric" refers in particular to a preferably flat product formed by a plurality of threads crossing each other. The threads are guided over and under crosswise threads, in particular in a repetitive sequence.

The protective layer 5 is preferably for improving mechanic strength and/or for electrical and/or thermal insulation, and/or for heat resistance of the protective element 1.

Preferably, the protective element 1 comprises one or two protective layers 5 in addition to the foam layer 2 and fibre layer 3.

The protective layer 5 is preferably arranged on the outside of the protective element 1 and/or layers 2 and/or 3, e.g. on opposite sides of the foam layer 2 or the fibre layer 3.

In particular, two protective layers 5 are arranged on opposite sides of the protective element 1 and/or both sides of the composite including the foam layer 2 and the fibre layer 3.

The two protective layers 5 may be identical or different.

The protective layer 5 preferably forms a cover layer or outer layer of the foam layer 2, the fibre layer 3 and/or the protective element 1.

Preferably, the protective layer 5 comprises or is essentially made of a mineral protective material 6, in particular mica, most preferred phlogopite. This enables a particularly high heat resistance, while allowing some heat distribution over the surface.

Preferably, the or each protective layer 5 comprises more than 100 g mica or phlogopite per m².

The protective layer 5 is preferably provided or reinforced with a fibre reinforcement or scrim 7 and/or by the fabric mentioned above, particularly preferred on the side facing outside or facing away from the foam layer 2 and/or fibre layer 3.

In particular, the scrim 7 is provided with or forms the support for the protective material 6.

For example, one protective layer 5 can be designed as heat-resistant or high dielectric layer and/or mica layer, and the other and/or protective layer 5 can be designed as or provided with the fabric or fibre enforcement 7, but optionally without mica.

The different layers 2, 3, and 5 are preferably connected to each other, in particular adhesively and/or by means of bonding layers 4. The different bonding layers 4 may be identical or different, depending on the materials to be connected.

As an alternative or in addition to the connection and/or adhesively bonding, a thermally unstable adhesive and/or a thermally unstable connection and/or connecting foil can also be used.

The layers 2, 3 and/or 5 are connected in particular by adhesive bonding. However, other joining techniques, such as sewing or welding, are also possible.

Preferably, the protective element 1 consists only of two functional layers 2 and 3 or three functional layers 2, 3 and 5 (including one or two layers 5). In this context, the term "functional layer" has to be understood that the respective layer provides a significant function relevant for the functionality of the protective element 1. This does not exclude that the protective element 1 may comprise non-functional layers in addition, such as the bonding layer(s) 4, the woven fabric, or the like.

For example, the insulation function can be provided by all layers 2, 3, and 5 depending on the temperature or up to different temperatures. Preferably, the layers 3 and 5 have a significant higher heat resistance than the foam layer 2.

The desired compressibility of the protective element 1 is provided preferably essentially by the foam layer 2, in particular up to 100 or 250 Pa, or by the layers 2 and 3 even if the fibre layer 3 has a preferably significantly lower (relative and/or absolute) compressibility than the foam layer 2, but nevertheless may contribute notably to the overall compressibility.

The protective element 1 and/or the layers 2, 3 and/or 5 is and/or are preferably designed to be heat-resistant, in particular up to at least 200 °C, most preferred above 250 °C.

The layers 3 and/or 5 are preferably designed heat-resistant above 600 °C, 800 °C or 1000 °C, wherein the foam layer 2, the bonding layer 4, connection and/or adhesive bonding of the layers need not comprise this heat resistance.

The term "heat-resistant" in the sense of the present invention is preferably used to describe the resistance or durability of a material or component to high temperatures or the temperatures mentioned.

In particular, the temperatures specified for heat resistance represent preferred minimum values of the melting temperature, or particularly preferred lower limits of 0.8 or 0.9 times the melting temperature, and/or preferred upper application temperatures in the sense explained below and/or refer in particular to the base material, e.g. in the case of fibre layer 3 in particular to its fibres 3A or in the case of foam layer 2 e.g. to foam.

A material or component, in particular the protective element 1 and/or one of the layers 2, 3, 5, is heat-resistant (up to an upper application temperature) in the sense of the present invention, in particular, if up to this application temperature, it can maintain its properties - for example its dielectric strength, its mechanical stability or shape, its strength or deformability or the like - or does not change them to such an extent that it is no longer suitable for the desired application (in this case the sealing or insulation and/or electrical or thermal insulation of the battery or battery cells, in particular in case of an accident or thermal runaway).

In particular, layer 5 is to be regarded as heat-resistant within the meaning of the present invention if it is made of or contains mica or phlogopite and/or fibres of glass, silicate and/or ceramic, or a mixture thereof.

In particular, fibre layer 3 shall be regarded as heat-resistant within the meaning of the present invention if it is made of or contains glass, silicate and/or ceramic fibres or a mixture thereof.

Preferably, a material or component, in particular the protective element 1 and/or one of the layers 2, 3 or 5, is heat-resistant if it meets the requirements of one of the insulation material classes according to DIN EN 60085:2008-08, in particular insulation material class F, H, N or R of this standard.

The protective element 1 is designed in particular as a flat layer package and/or in particular is designed to be both compressible and pliable.

The term "pliable" is preferably understood to mean a sufficiently low bending stiffness of the protective element 1, wherein the bending stiffness is a measure of the resistance of an acting force to bending deformation for a component and/or the protective element 1. The bending stiffness is preferably determined according to ISO 5628, preferably ISO 5628:2019. For this purpose, preferably, a plate-shaped protective element 1 with a certain dimension, for example with a thickness of 6 mm and a size of 60 mm x 40 mm, is clamped in a rotatable clamping device. The free end of the protective element 1 touches a sensor of a load cell, via which a corresponding contact force is recorded when the clamping device is rotated. In particular, the sensor contacts the free end of the heat protective element 1 at a distance of 50 mm from the clamping point. The bending stiffness is determined in particular by the force measured at the sensor when the protective element is bent by 15°.

Preferably, the protective element 1 has a bending stiffness determined in this way of less than 10 N, preferably less than 5 N, in particular less than 1 N.

The proposed protective element 1 and/or the fibre layer 3 is preferably compressible and thus allows adaptation to the installation conditions, in particular between individual battery cells 8A and/or between battery cells 8A and the housing 9.

Most preferred is an installation with a certain pretension and/or compression of the protective element 1 and/or the protective elements 1 in the installed condition. The preferred compression is at least 20 kPa and/or more than 25 kPa when installed.

Some battery cells 8A expand and contract as a function of the state of charge and agening. The protective element 1 is designed in particular in such a way that such a "breathing" of the battery cells 8A can be compensated over the life time of the cells 8A.

In particular, protective element 1 is designed to withstand a compression pressure of at least 300 kPa, most preferred at least 450 kPa or more. This is beneficial to the possible "breathing" of the battery cell 8A and/or a high load capacity in the event of a fire, short circuit, accident or the like. This compressibility and/or such an elasticity should be possible over the life time of the battery 8.

Preferably, the protective element 1, foam layer 2 and/or fibre layer 3 are compressible.

The term "compressible" is preferably understood - in particular in this context - to mean a sufficiently low compression hardness of the protective element 1, the compression hardness representing a pressure required to compress a test specimen and/or the protective element 1 by 40 % of its original thickness. The compression hardness is preferably determined in accordance with DIN EN ISO 3386, preferably ISO 3386-1:1986, using a plate-shaped heat protective element 1 with a thickness of 5 mm and a size of 300 mm x 200 mm as the test specimen and an aluminium plate with a thickness of 20 mm and a size of 190 x 80 mm as the indenter.

Preferably, the protective element 1 and/or the fibre layer 3 has a compression hardness determined in the aforementioned way of less than 40 kPa, preferably less than 30 kPa, in particular less than 20 kPa.

Preferably the protective element 1 and/or the fibre layer 3 is highly elastically compressible (in the thickness direction, i.e. perpendicular to the surface extension), most preferred at least in a range of at least 90 % to 50 % relative to the thickness in the uninstalled state.

Preferably, the mass per unit area of the protective element 1 is less than 3000 or 2700 g/m², preferably less than 2100 g/m², and/or more than 550 g/m², preferably more than 200 g/m² in particular more than 700 or 800 g/m².

The protective element 1 preferably has a thickness of less than 15 mm, preferably less than 10 mm, in particular between 3 and 9 mm, in particular in the uncompressed state or delivery state.

In particular, the protective element 1 - preferably when installed - is less than 7 mm, preferably less than 6 mm, in particular between 2 and 5 mm, thick. This allows a flexible and easy installation in the battery 8, even in narrow installation gaps.

Particularly preferably, the protective element 1 has a dielectric strength of more than 2.5 kV/mm, preferably more than 2.9kV/mm, in particular of 3 to 20 kV/mm. This avoids and/or delays the formation of arcs or sparks.

The dielectric strength defines the limit of the electrical field within the material up to which a voltage breakthrough (electric arc or electric spark) does not occur.

The dielectric strength is preferably measured according to IEC 60243-1:2013.

The measurement is conducted preferably under normal conditions between 20 °C and 25 °C and preferably with a relative humidity of about 50 % and/or with the protective element 1 in its compressed state.

The thermal conductivity of the protective element 1, the foam layer 2 and/or fibre layer 3 at 25 °C room temperature is less than 0.13 W/mK, preferably less than 0.08 or 0.09 W/mK, in particular less than 0.05 W/mK.

The protective element 1 or the protective layer 5 optionally comprises an adhesive layer (not shwon), in particular only applied partially or punctually, and/or is designed to be self-adhesive in order to facilitate and/or enable the fastening and/or assembly of the protective element 1 to and/or in the battery 8 and/or its housing 9.

In the following, the proposed battery 8 and an arrangement and/or a use of protective element 1 according to the proposal, in particular of protective elements 1A and 1B according to the proposal and optionally further heat protective elements 1C and 1D according to the proposal or similar protective elements 1 in the battery 8 is explained in more detail on the basis of Fig. 2.

The protective elements 1A to 1D can be designed identically or differently.

In the following, the protective elements 1A to 1D are also referred to as first protective element 1A, second protective element 1B, third protective element 1C and fourth protective element 1D for differentiation. However, this only serves to differentiate the different protective elements 1 and does not imply that, for example, if the third protective element 1C is provided, a second protective element 1B must also be present.

Preferred is that for power supply the battery 8 is arranged and/or installed in a schematically depicted vehicle 12, especially an electric vehicle. In particular, when installed, battery 8 is located below a vehicle interior 12A, for example a passenger or other interior area of the vehicle 12.

The battery 8 preferably has a housing 9 with an upper housing part and/or housing lid 9A and a housing bottom part. Here, the housing 9 and/or housing bottom part comprises at least one housing side wall 9B and a housing bottom 9C.

The housing 9 preferably consists of a non-conductive material, for example plastic, or of metal.

The battery 8 is preferably designed as a rechargeable accumulator, in particular lithium-ion accumulator. Alternatively, it can also be constructed or designed from or with lithium iron phosphate, lithium cobalt oxide, lithium metal oxide, lithium ion polymer, nickel zinc, nickel metal, nickel cadmium, nickel hydrogen, nickel silver, nickel metal hybrid, all-solid state, lithium air, lithium sulphur and similar systems and/or materials.

In particular, the battery 8 has at least one group of battery cells 8A which are in particular electrically wired and/or housed in housing 9, preferably in the lower housing part 10.

Preferably, the protective element(s) 1 is/are arranged within the interior space of the housing 9 accommodating the battery cells 8A.

Preferably is that at least one protective element 1, in particular a first protective element 1A, is attached and/or fixed, preferably adhesively bonded, preferably above the battery cells 8A and/or in particular on the housing 9 and/or housing lid 9A. The first protective element 1A closes and/or insulates the housing bottom part and/or the battery 8 or its cells 8A preferably on the top side.

In this way, a particularly efficient top-side heat insulation and fire protection against the vehicle interior 12A is achieved, in order to protect persons or objects inside efficiently and/or long enough from uncontrolled heat development in the battery 8.

The battery 8 and/or the housing 9 preferably comprises at least one outlet 10 which - at least in the event of fire and/or excessive heating or a strong pressure increase inside the battery 8 - allows gas to escape from the battery 8 and/or the housing 9 to the outside and thus pressure compensation. This prevents the battery 8 from exploding and/or bursting, in particular in the event of fire and/or short circuit and/or overheating.

The outlet 10 is preferably arranged in the housing lid 9A and/or on a top side of the battery 8 and/or the housing 9.

The battery 8 and/or housing 9 preferably comprises several outlets 10 for the escape of gases and/or pressure compensation.

Preferably, the and/or each outlet 10 is/are basically and/or as delivered and/or during normal use or as far as necessary closed or closable, in particular by means of a thermally unstable and/or not pressure-stable element 11, in particular most preferred by means of a bursting disc or the like

Instead of the bursting disc, another element or valve can also be used as a closing element 11, for example, which basically encloses the outlet 10 and opens in the event of fire and/or in the event of a short circuit or overheating - preferably automatically depending on pressure and/or temperature. However, other design solutions are also possible.

In the event of fire, short circuit, overheating or other pressure increase in housing 9, pressure compensation can be achieved via outlet 10, in particular after bursting disc and/or opening of the valve, by allowing gas to flow out of housing 9 through outlet 10. The protective element 1 and/or its fibre layer 3 acts as a filter, so that unwanted toxins and gases can be filtered out and/or retained. Furthermore, the protective element 1 serves as a barrier against the escape of flames or sparks through the open outlet 10 and/or can pick up the mechanical loads that may occur abruptly when the outlet 10 is suddenly opened and/or the battery is subject to thermal runaway, so that the protective element 1 retains its desired filter function and safety function against the escape of flames, especially in the aforementioned case of gas flowing out through the outlet 10.

In the illustration example, the housing 9 comprises one or more outlets 10 in particular in the housing lid 9A, which is or are preferably covered on the inside by the protective element 1 and/or first protective element 1A.

Alternatively or additionally, the battery 8 and/or the housing 9 and/or at least one housing side panel 9B may also comprise one or more lateral outlets 10 as shown in Fig. 2. In this case, in particular in addition or as an alternative to the first protective element 1A, the further and/or second protective element 1B is/are also provided, which covers the respective side wall 9B and/or the respective lateral outlets 10.

In particular at least one first protective element 1A and at least one second protective element 1B are used, wherein the first protective element 1A encloses and/or thermally insulates the interior of the housing on the top side and the second protective element 1B is arranged laterally on a housing side wall 9B. Preferably the second protective element 1B is attached, in particular crosswise and/or perpendicularly, to the first protective element 1A, preferably adhesively bonded, needled or welded.

Preferably all side walls 9B of the battery 8 and/or housing 9 are provided or covered on the inside with second protective elements 1B, preferably also independently of outlets 10 formed therein.

The second protective element 1B is preferably also fastened and/or adhesively bonded to the associated side wall 9B.

The preferred proposed arrangement and inside covering of the outlet or outlets 10 by one or more protective elements 1 allows very easy assembly and construction of the battery 8, which provides the desired pressure compensation in case of fire and/or short circuit or overheating, while ensuring the desired filtering and protection properties at the outlet 10 for use in a vehicle 12.

As an alternative or in addition to the first protective element 1A and/or the second protective element 1B, the battery 8 can comprise a further and/or third protective element 1C, as shown as an example in Fig. 2.

The third protective element 1C is preferably arranged opposite the first protective element 1A and/or on a lower side and/or the bottom 9C inside the housing. Preferably the lower side and/or the bottom 9C is completely and/or completely covered by the third protective element 1C.

The third protective element 1C is preferably fastened and/or adhesively bonded to the bottom 9C. However, other constructive solutions are also possible.

The protective elements 1A-C are preferably each arranged between a battery cell 8A and/or the battery cell 8A and the housing 9.

Alternatively or in addition to the protective elements 1A-C, preferably at least one (further and/or fourth) protective element 1D is provided and arranged between the battery cell(s) 8A, whereby these cells 8A or cell groups are thermally insulated and/or separated from each other. The protective element 1D is most preferred inserted, pressed in or provided in any other way between the battery cells 8A.

Preferably, the protective element 1/1D of the present invention is arranged between all battery cells 8, as indicated in Fig. 2. Fig. 3 does not show this preferred aspect as it is only schematic.

The battery cell 8A are preferably at least substantially fully and/or on all sides encased by one or more 1D protective elements.

Preferably, the protective element(s) 1 can perfectly compensate for any possible expansion of the cells 8A during charging and/or ensure a mechanical pretension as defined as possible over the service life of the battery 8. At least approx. 25 kPa are required in the delivery condition. Over the service life, the pressure in the installed condition may increase to a maximum of 250 kPa or even 500 kPa due to the expansion of the cells 8A (swelling). These values vary depending on the cell type (round cell, pouch cell and prismatic cell) and can be adapted to customer requirements.

In particular, the protective elements 1D enclose and/or encase several or all battery cells 8A on all sides and/or in particular in such a way that the battery cells 8A are supported and/or arranged in the housing 9 in such a way that they are insulated, shielded and/or damped with respect to one another. The protective element 1 thus preferably forms a storage mat for the battery cell(s) 8A. In addition to effective thermal insulation, in particular on all sides, this also enables robust and/or resistant storage of the battery cells 8A, since any shocks and/or vibrations are damped and/or absorbed by the compressible protective element 1.

The battery cell 8A are preferably - in groups or individually - at least substantially completely and/or on all sides enclosed and/or surrounded by one or more protective elements 1A-1D, i.e. insulated and/or shielded off from one another in the battery 8.

In the case of cylindrical design of the battery cell 8A, the fourth protective elements 1D can, for example, be designed hollow cylindrical and thus radially surround the battery cell 8A - in particular individually - wherein further protective elements 1, such as the first protective element 1A and the third protective element 1C can, for example, axially cover or seal off the battery cell 8A.

In the case of cell stacks, intermediate layers can also be formed for the axial separation of battery cell 8A from the protective elements 1.

It should be noted that the protective element 1 and/or 1D can in principle and in particular also when arranged between the battery cell 8A - i.e. in particular when not arranged on the outside between the battery cell 8A and housing 9 - comprise additional layers, such as a further fibre layer and/or another intermediate layer, separating layer or insulating layer as required and may therefore also have a lower gas-permeability.

Tests have shown that the proposed protective element 1 is suitable both for containing heat within battery 8 and for top side and/or side arrangement and/or insulation, i.e. in particular for thermal protection of adjacent vehicle interiors 12A.

Alternatively or in addition, the proposed protective element 1 can also be used and/or arranged to insulate a control, control device and/or control electronics 8B of the battery 8, in particular in the housing 9 of the battery 8, in particular to insulate it from one or more battery cells 8A, as schematically shown in Fig. 2 on the right side where the control device 8B could be placed e.g. instead of one cell 8A in the battery 8 and/or housing 9. This use or arrangement may also serve, for example, in the event of the failure and/or thermal runaway of a battery cell 8A, to contain heat and/or provide insulation within battery 8 and thus ultimately stabilize battery 8, in particular for a longer time than previously.

Individual aspects of the present invention can, as already mentioned, be combined as desired, but also realised independently of each other.

### List of reference numbers:

- 1(A, B, C, D): protective element
- 2: foam layer
- 2A: pore
- 3: fibre layer
- 3A: fibre
- 3B: thread
- 4: bonding layer
- 5: protective layer
- 6: mineral protective material
- 7: carrier layer
- 8: battery
- 8A: battery cell
- 8B: control / control device
- 9: housing
- 9A: housing lid
- 9B: housing side wall
- 9C: housing bottom
- 10: outlet
- 11: (closure) element
- 12: vehicle
- 12A: vehicle interior

## Claims

1. Multi-layer protective element (1) for thermal insulation of a battery (8),
with a foam layer (2) and a fibre layer (3),
**characterized in**
**that** the fibre layer (3) comprises a or is formed by a preferably needled non-woven fibre fleece, and/or is compressible, preferably by more than 30 % at 100 or 250 kPa, and/or is at least essentially binder-free, and/or
**that** the protective element (1) further comprises a protective layer (5), preferably wherein the protective layer (5) comprises a mineral protective material (6).

2. Protective element according to claim 1 or 2, **characterized in that** the fibre layer (3) is made of glass fibres, ceramic fibres or silicate fibres (3A) or a mixture thereof.

3. Protective element according to claim 1 or 2, **characterised in that** the fibres (3A) of the fibre layer (3) comprise a finish containing a metal oxide, in particular aluminium oxide.

4. Protective element according to one of the preceding claims, **characterised in that** the fibre layer (3) or fibre fleece is sewed with a thread (3B), preferably of glass fibre(s).

5. Protective element according to one of the preceding claims, **characterised in that** the foam layer (2) is made of silicone.

6. Protective element according to one of the preceding claims, **characterised in that** the foam layer (2) is made of polyurethane.

7. Protective element according to one of the preceding claims, **characterized in that** the fibre layer (3) and/or the foam layer (2) are - preferably elastically - compressible, in particular more than 30 % at 100 or 250 kPa.

8. Protective element according to one of the preceding claims, **characterized in that** the foam layer (2) is softer or more compressible than the fibre layer (3).

9. Protective element according to one of the preceding claims, **characterized in that** the foam layer (2) and the fibre layer (3) are bonded, preferably by a bonding layer (4) or adhesive, and covered on the outside, preferably on both sides, by the protective layer (5).

10. Protective element according to claim 9, **characterised in that** the fibre layer (3) comprises or is formed by a needled non-woven fibre fleece and that the protective layer (5) comprises mica as mineral protective material (6).

11. Protective element according to one of the preceding claims, **characterised in that** the protective mineral protective material (6) is or comprises one or more phyllosilicates, preferably mica, in particular phlogopite.

12. Battery (8), preferably lithium-ion battery,
with a housing (9) and at least one multi-layer protective element (1) arranged in the housing (9) for thermal insulation,
wherein the protective element (1) comprises a foam layer (2) and a fibre layer (3),
**characterized in**
**that** the protective element (1) is designed according to one of the preceding claims.

13. Battery according to claim 12, **characterized in that** the battery (8) comprises prismatic or pouch cells (8A).

14. Battery according to claim 12 or 13, **characterized in that** the protective element (1) or an additional protective element (1D) is arranged between two adjacent battery cells (8A) of the battery (8).

15. Use of a multi-layer protective element (1) with a foam layer (2) and a fibre layer (3) for thermal insulation in a battery (8),
**characterized in**
**that** the protective element (1) is designed according to one of claims 1 to 11.
